# EUROPEAN PATENT APPLICATION

(11) **EP 2 826 581 A1**
(43) Date of publication of application: **21.01.2015**
(21) Application number: 14177743.3
(22) Date of filing: 19.07.2014
(51) Int. Cl.: B23D 47/02

(54) **Sawing machine with improved pusher**

(30) Priority: 19.07.2013 NL 2011204; 16.07.2014 NL 2013199
(71) Applicant: Machinefabriek Elcon BV, 2451 VV Leimuiden (NL)
(72) Inventor: Meijer, Piet, 2451 VV Leimuiden (NL)
(74) Representative: Assendelft, Jacobus H.W.

(57) **Abstract**

A sawing machine of vertical type, with means (50) to accurately move an against the supporting bed bearing material (57) to be sawn as upward; and a pusher (53) to sideways displace a from the sheet cut lower strip present in the machine, bearing against the supporting bed wherein the machine is designed such that the pusher temporary is no obstruction for the passage of a sheet to be loaded into the machine; and/or such that the pusher temporary or permanently is no obstruction for displacement in front of the supporting bed of the sawing portal.

## Description

This invention relates to a sawing machine, particularly of the vertical type, e.g. designed to saw sheet material. However the invention is also applicable to sawing machines of another type, or a milling machine or a different the sheet separating machine. In the following the invention is mainly illustrated by way of a sheet sawing machine of vertical type.

A vertical sheet sawing machine is e.g. disclosed in NL-A-9100778, EP-A-0512640, and US-A-4181054, which can be used as technical background. GB1449763, EP0602574, EP0451111 and EP1990120 are also relevant.

Preferably the invention is applied to a machine which is e.g. based on EP1990120 and preferably is provided with one or more of: an upright, or vertical, a supporting bed for the sheet to be cut providing frame of horizontal strips (its level can be adapted by means), along the lower and top edge of which a the circle sawing blade carrying portal structure is guided to be displaceable in width wise direction of the supporting bed. The circle sawing blade is displaceable along the portal structure (in case of a milling machine the sawing blade is replaced by a milling head). Thus the sawing blade can move horizontally and vertically across the supporting bed. Along the lower edge of the supporting bed a forwardly from the bed projecting supporting ledge preferably provided by free rotating rolls extends. Closely above these supporting rolls there is below the frame of strips a fixed strip providing e.g. an inclined barrier to guide the lower edge of a sheet towards the supporting rolls during positioning it into the machine. The supporting bed is furthermore provided with two between the top and bottom edge according to a straight line displaceable sheet clamps. These sheet clamps grip the top edge of a sheet which bears against the supporting bed. This sheet bears with its lower edge onto the supporting ledge or is suspended slightly above it from the sheet clamps. Thus horizontal strips can be cut from the sheet, starting from below. After a strip is removed, one can lower the sheet with the aid of the sheet clamps onto the supporting ledge or just above it, to cut a next strip. By sideways moving caused by a pusher a just cut strip bearing onto the supporting ledge, the strip can be cut vertically while still bearing against the supporting bed. To accurately divide the strip the supporting bed is provided with an adjustable stop to limit the sideways movement of the just cut strip according to desire. If a horizontal cut joins a strip of the frame, the frame is by adapting means moved up or down such that the planned cut no longer joins a strip of the frame. This displacement of the frame of strips is independent from the displacement of the sheet clamps.

Thus, a sheet piece can be accurately both in length and width taken from a sheet, or bundle of sheets, starting from below.

The object of this invention is a further improved sawing machine, particularly a further development of the technical basis relating to dividing the sheet starting from below. More preferably the improvement can be applied to existing machines.

On the one hand this is obtained with a machine having a pusher which can be moved between an operating position in which the pusher is designed to advance through the machine the strip which bears against the supporting bed and the supporting ledge, and a passing position in which the pusher allows free passage to a strip or sheet or sheet part bearing against the supporting ledge and supporting bed. Preferably the passing position is obtained in that the pusher moves away from the supporting bed, in other words space is created between the pusher and the supporting bed, which space offers a sheet bearing against the supporting bed and the supporting ledge the possibility to pass between the pusher and the supporting bed. Also a different manner of retracting or moving away of the pusher is feasible. This improvement (retractable pusher) is most suited for a pusher at low level within the machine which can not be taken to a high level to a position above the upper edge of a sheet bearing against the supporting bed and supporting ledge as an alternative manner to allow free passage of the sheet.

In this manner it is possible to load a sheet into the machine from the side of the machine where the pusher is located at the start of sawing a sheet (in other words the parking position or starting position of the pusher). As a rule this is the right side of the machine. The sheet can now also from the right side of the machine and bearing onto the supporting ledge be loaded into the machine while passing the e.g. below to the right in the machine in the passing position located pusher.

On the other hand this is obtained by constructing the machine such that the pusher is no obstruction to the portal structure (sawing portal) carrying the circle sawing blade or different separating element (pusher does not obstruct the sawing portal). E.g. in that this sawing portal is not obstructed during horizontally sawing a to the pusher fixed, against the supporting bed and onto the supporting ledge bearing sheet part, previously horizontally sawn by the machine (by the same separating element) from the lower part of the into the machine located sheet, into an upper and lower strip part using the separating element present at the sawing portal. This is e.g. obtained by constructing the pusher sufficiently small such that the pusher, or the in the pushing direction leading part of it, fits with play into the space between the supporting bed and the in front of the supporting bed passing sawing portal, such that a by the pusher fixed strip into the machine can be completely horizontally separated for its complete length by the separating element at the sawing portal wherein the sawing portal moves sideways during separating and during that passes the pusher completely or partly. Or this is e.g. obtained by temporary disconnecting the pusher (which is e.g. obstructive to the sawing portal or the separating element) from the horizontally to be sawn sheet part and moving away the temporary disconnected pusher from the at a fixed location within the machine remaining sheet part such that the separating element can horizontally saw the sheet part without obstruction while the sheet part remains at a fixed location within the machine, after which the pusher returns to the now horizontally over its complete length in two separated, at a fixed location within the machine remaining, sheet part to resume gripping the sheet part and subsequently push the sheet part through the machine. During this procedure of temporary moving away of the pusher from the sheet part, the sheet part is e.g. kept at a fixed location within the machine by to the machine belonging convenient retaining means, e.g. the lower edge of the sheet part engaging automatic clamps. During this procedure the sheet part preferably remains at the location within the machine into which it was at the time the pusher releases the sheet part. Pusher also means a with the pusher associated component which is present to allow the pusher to function, such as a propulsion motor.

Thus, according to the invention, the device is designed such that the pusher temporary causes no obstruction to the passage of a sheet to be loaded into the machine; and/or such that the pusher temporary or permanently causes no obstruction to the displacement of the sawing portal in front of the supporting bed, e.g. by constructing the pusher sufficiently small, or by temporary moving the pusher outside the displacement area of the sawing portal while maintaining the position fixation of the into the machine located strip which must be separated horizontally.

Preferably the invention is applied to a sawing or different processing machine with: a first clamping or retaining means (or sheet manipulator) to accurately move the sheet material bearing against the supporting bed in a first direction, such as upward; and/or a second clamping or retaining means (or sheet manipulator, the so called pusher) to displace and/or position (according to a second direction, different from the first direction; preferably sideways) of a from the sheet cut strip which is present in the machine, bearing against the supporting bed. In this text this second clamping or retaining means is also called "strip clamp" or "pusher". Preferably the sheet is exclusively displaceable into the first and/or second direction by the first and second, respectively, clamping means, for which one or both clamping means are e.g. exclusively displaceable according to a straight line.

The first and/or second clamping or retaining means is designed to releasably holding the sheet or strip within the machine, preferably by clamping or gripping.

Preferably means are provided with which the strip clamp is not (or substantially not) or only slightly displaceable in the first/upward direction, e.g. for a distance less then half of a quarter of the dimension of the supporting bed in this direction. Means which provide a larger displacement into this direction for the strip clamp (such as with EP-A-0451111 wherein said means extend the complete height of the supporting bed) are conflicting and costly. Experiences have shown that if dividing the sheet into strips starting from below, such a large displacement is not required. The displacement in said direction can be limited to an amount to e.g. take tolerances and clearance. Thus a driving and guiding means for displacement in said direction is superfluous.

The strip clamp is preferably designed to grip the strip at low level, preferably a lower corner. Preferably as low as possible with a view to a strip which is as thin as possible. The strip claim preferably grips the strip exclusively at the low level.

Preferably the machine is operated such that the strip clamp grips the one side edge of the strip and pushes the strip sideways through the machine to bring the opposite side edge beyond the sheet part (at higher level suspended from the sheet clamps and bearing against the supporting bed) within the machine. The strip clamp can then retain the strip permanently during successively cutting it, while a from the strip cut piece can be immediately taken from the machine. This is an advantage for the speed and accuracy of operation. In this connection it will be required with most embodiments that the strip clamp and its driving and guiding means are as compact as possible to avoid conflicts with the sheet being cut and other components of the machine. The strip clamp moves during this operation more and more at a distance from above or below it.

Preferably the driving and/or guiding means, or component of it, is present below the supporting part (e.g. rollers) supporting the into the machine located sheet with its lower edge. E.g. this is a toothed track or screw spindle or guiding rail. The strip clamp is preferably located above said supporting part.

Its is most preferable if the driving and/or guiding means are located at low level at the machine, preferably merely below the supporting part.

The strip clamp and/or sheet clamp are preferably pneumatically driven. The strip clamp and/or sheet clamp preferably comprise a stationary jaw and a towards and away from it movable (e.g. pivotably mounted) jaw. The movable jaw is preferably located at the side such that it engages the side of the sheet within the machine facing away from the supporting bed. Alternatives are feasible, such as a suction cup or two stops which each engage one of the side edges of the strip to keep it captured between them.

For the location of the driving/guiding means of the strip clamp, avoiding contamination plays a role.

The strip clamp is preferably located at a distance from its guiding means, relative to the direction of displacement of the strip clamp, e.g. at an outrigger that is mounted to the structure containing the driving and/or guiding means or part of it. Thus the chance for interference with other elements of the machine or sheet is minimized and also a "floating" suspension of the clamp is realized. This floating suspension is preferably limited to the upward direction. Thus a sheet or strip with an irregular lower edge can after all smoothly displaced across the supporting rolls, while retained by the strip clamp.

The drive of the strip clamp and/or sheet clamp is preferably electronically controlled, e.g. by using electronic sensors and a conveniently programmed computer.

The sawing machine of the invention preferably has one or more of the following elements: a frame with means, such as a frame of strips, to supporting on or against it a sheet for sawing (preferably the sheet bears with its lower side); first guiding means to support and in a first direction guide a coupling part to which two guiding means are mounted that are designed to support and guide in a the first direction crossing second direction a separating element, such as a sawing element (e.g. circle saw), wherein both directions run parallel to the sheet to be sawn, such that the sawing element can be displaced in a plane parallel to the sheet and is able to make from the front a cut in the sheet; vacuum means with a close to the sheet located vacuum nozzle for removing parts that are released during sawing; means to support de sheet, or cut part of it, along an edge (preferably the lower edge) ; means to (preferably displaceably retain) the sheet to be sawn (preferably close to the top edge); setting means to keep the means supporting the sheet away from the sawing element during sawing. Last mentioned means are particularly designed to avoid that the supporting means (the frame of strips supporting the sheet to be sawn) are cut and are as a rule designed to displace the horizontally extending strips vertically in case a strip corresponds to a horizontal cut to be made. Preferably last mentioned means are acting independent from the retaining means (e.g. such that if the supporting means are displaced, the retaining means do not move with them) . The sawing element will typically be part of a sawing apparatus with e.g. motor to drive the sawing element. As the sawing element use can be made of an alternative processing element to divide the sheet material in length and/or width, e.g. a milling head. The first and second guiding means and the coupling part can e.g. comprise a portal structure and function as control and/or guiding means, to move the sawing element along a preferably straight track across the supporting bed.

The invention is now illustrated by way of a the invention non-limiting, at this time preferred embodiment, referring to the enclosed drawing, that shows in:
Fig. 1 a perspective of a part of a sawing machine;
Fig. 2 a front view of a part of fig. 1;
Fig. 3 a side view of detail III of fig. 2;
Fig. 4 a perspective side view of a part of a sawing machine and a sheet to be sawn, during a start phase;
Fig. 5 the top view of a part of fig. 4;
Fig. 6 a detail of fig. 5, in two positions;
Fig. 7 a view like fig. 4 from a different direction of view, during an intermediate phase;
Fig. 8 a front view of the machine of fig. 4, during an end phase; and
Fig. 9 the top view of a detail of fig. 8, in two positions.

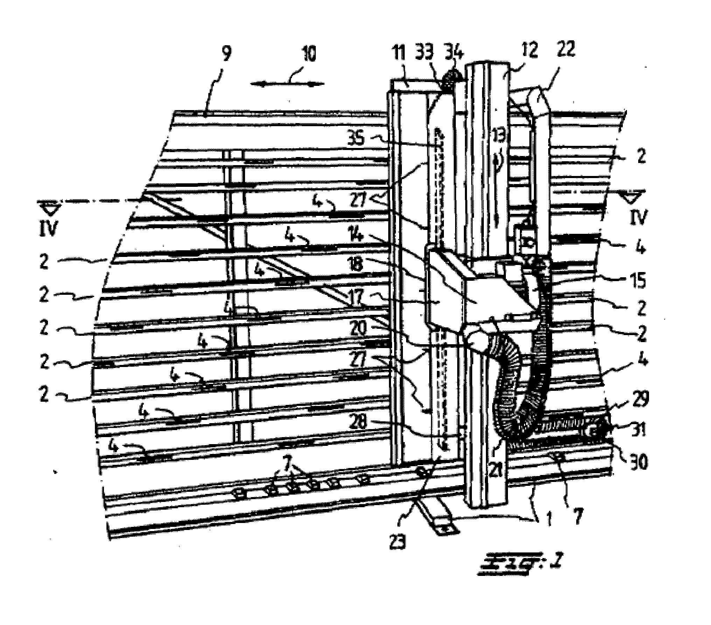

Fig. 1 shows a sawing machine of vertical type, according to fig. 1 of NL-A-9100778. For a further discussion of the in this figure shown details reference is made to this publication. In fig. 1 the same reference numbers are used as in NL-A-9100778 for the same elements.

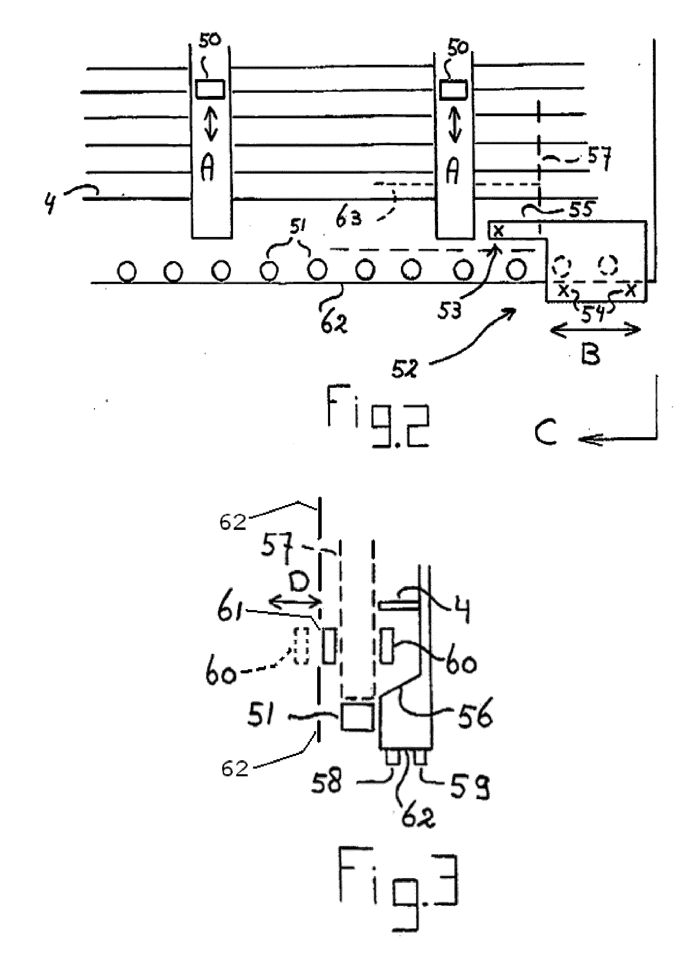

Fig. 2 shows schematically a part of the frame of strips with features incorporated for the two exclusively vertically displaceable (indicated with arrow A) sheet clamps 50, which are e.g. synchronous driven by means of e.g. for each an own screw spindle. Also the rollers 51 are shown onto which the sheet will bear with its lower edge. 52 generally indicates the system of strip clamp, its suspension, drive and guide. The location of the strip clamp in this system is indicated by 53; the location of the guiding wheels engaging a guiding rail with 54. The horizontal distance (in the direction of arrow B) between 53 and 54 is clearly shown, for which 53 is mounted to an outrigger 55. A sheet located in the machine is shown in phantom 57. The system 52 is exclusively displaceable in the direction of arrow B and is shown in the extreme right hand position. This is the starting position in which a sheet 57 is positioned into the machine. By providing a horizontal cut 63, there below a lowest strip is made which is retained by the strip clamp 53. Strip clamp 53 displaces to the left in the drawing, further and further below the sheet part (the part of the sheet 57 above the cut 63), pushing the strip forward.

Fig. 3 shows the lower part of the machine, as seen from the direction of arrow C in fig. 2 and the sheet 57. Of the system 52 only the fixed jaw 60 and the movable (in the direction of arrow D) clamping jaw 61 of the strip clamp 53 are shown. By movement of the jaw 61 in the direction of arrow D to and from the jaw 60 the sheet 57 can be clamped and released between the jaws 60 and 61. 56 indicates the inclined downward extending supporting strip below the strips 4. Below the strips 4 at a level below the rolls 51 there is a toothed track 58 and a guiding rail 59 with are mutually parallel and extend in the direction of arrow B. The strip clamp 53 is displaced in the direction of arrow B by a by a motor driven and to the system 52 belonging gear wheel which engages the toothed track. Guidance of system 52 is guaranteed by wheels 54 engaging rail 59 and being part of system 52. The fixed clamping jaw 60 is located below strips 4 and above strip 56. Movable clamping jaw 61 is located at the other side of the sheet 57 directly opposite jaw 60. The to the sheet 57 directed surface of clamping jaw 60 is present approximately within the supporting surface for the sheet as provided by the strips 4, or projects in the direction of the sheet 57 slightly beyond it. The sheet clamps 50 are designed in a similar manner.

The comparatively limited space that is available for the system 52 with the strip clamp 53, etc. is clearly visible.

An alternative is feasible, wherein the sheet clamps 50 are absent.

Preferably the sheet manipulator engages two mutually spaced locations of the sheet, and/or the sheet manipulator engages a single location at the sheet/strip. The elements of the sheet manipulator engaging the sheet are preferably connected to driving/displacing means to displace them substantially parallel and/or synchronous. The strip manipulator preferably engages the strip/sheet in an area below the minimum level in which the sheet manipulator can engage the sheet.

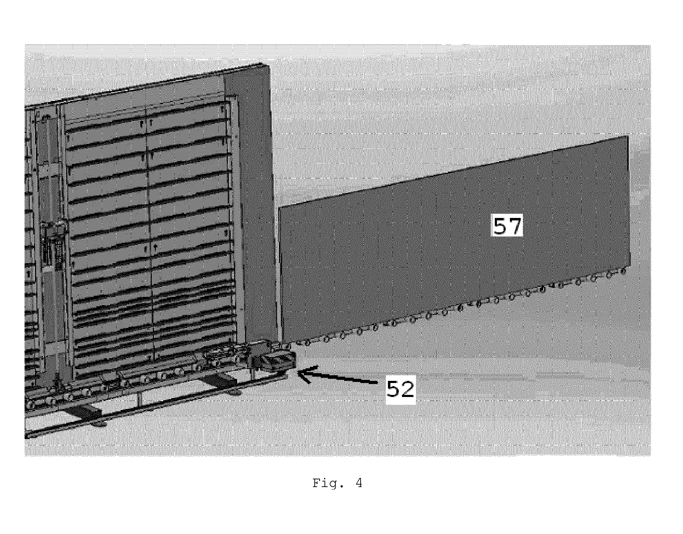

In Fig. 4 the sheet 57 is located in a supply rack, to the right of the machine. Bearing at the supply rack the lower edge of the sheet 57 is present at the level of the top side of the rollers 51.

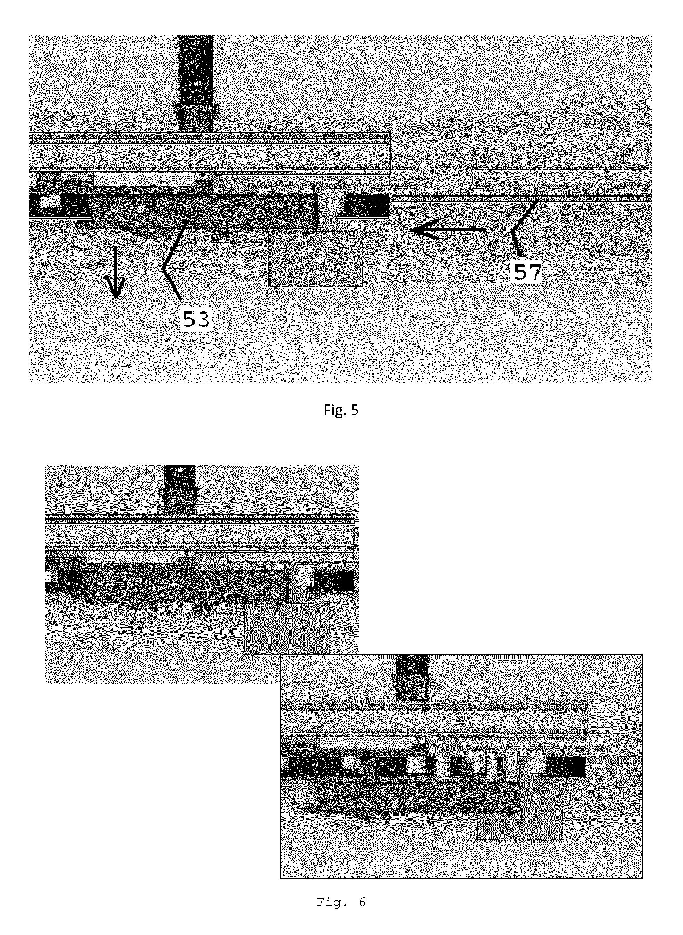

Fig. 5 shows in detail the pusher 53 positioned in the operating position, in the lower right corner of the machine. The pusher 53 obstructs moving to the left (viz. the arrow near the sheet 57) of the sheet 57.

Fig. 6 shows to the left the pusher 53 in the position of fig. 5, to the right in fig. 6 shows how the pusher 53 is moved away (illustrated by the arrows, also refer to fig. 5) from the machine, in other words is moved forward, into the passing position, to make space for the sheet 57 such that without obstruction it can be moved to the left (viz. also the arrow in fig. 5). Fig. 3 illustrates also schematically how the pusher 53 moves away from the supporting bed 4, illustrated by the fixed clamping jaw 61 which, while the pusher 53 is moved away from the supporting bed 4, takes the dashed drawn position and it will be appreciated that other elements of the pusher 53, such as the movable clamping jaw 61, are displaced in the same direction and dimension as the clamping jaw 60.

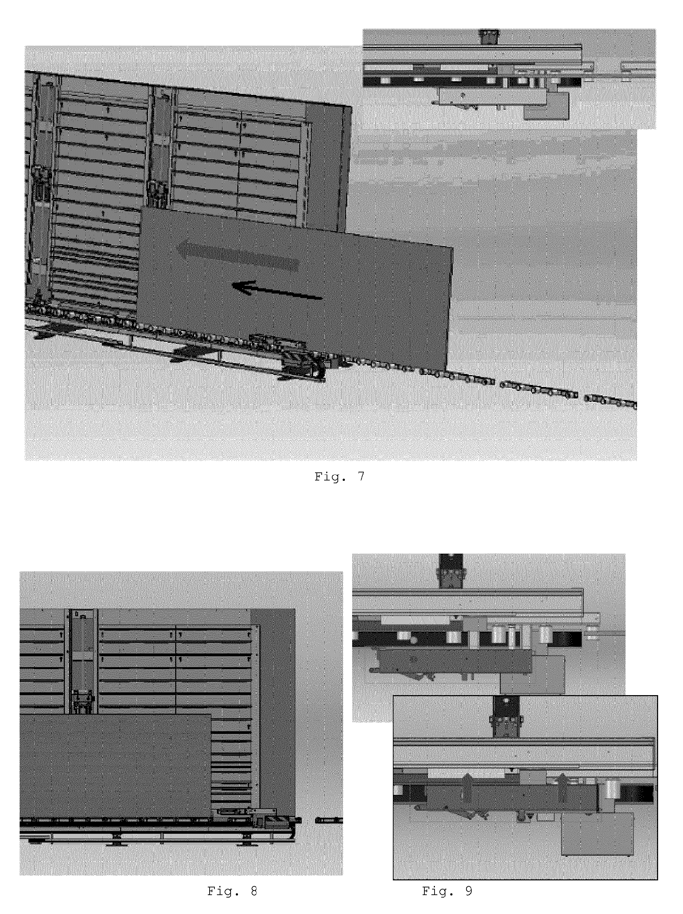

In Fig. 7 the sheet 57 with its lower edge is slid onto the rollers 51 of the machine and during that passes behind the pusher 53. At the top right hand of fig. 7 the environment of the pusher 53 during this phase is shown in top view.

Fig. 8 shows the phase if loading the sheet 57 into the machine is completed. The sheet 57 is completely passed beyond the pusher 53 and bears onto the rollers 51 and against the supporting bed 4.

Fig. 9 shows that, after obtaining the in fig. 8 illustrated phase, the pusher 53 from the passing position is moved back to the operating position. Sawing the sheet 57 can now be started and the pusher 53 can fix itself to the lower right hand corner of the sheet 57.

An application of the machine wherein the pusher 52 can be an obstruction, could be as follows: Starting from its in fig. 2 shown start position the pusher 52 moves to the left and pushes the below the separating line 63 present strip to the left through the machine while the rest of the sheet 57 remains in fixed position within the machine. At its left side the strip is made shorter by a with the saw of the machine provided vertical partition in the strip. Subsequently one desires to horizontally saw the thus shortened strip for its complete length by the saw of the machine. For that the sawing portal (not visible in fig. 2) must move from the left in fig. 2 to the right, to the location where at that time the pusher is positioned, or even beyond that, thus to the right of it. In fig. 3 line 62 illustrates the extreme inner side of the sawing portal, a collision with the pusher 52 can not be prevented, since the pusher (not visible in fig. 3) projects, viewed in transverse direction (the viewing direction perpendicular to the supporting bed 4) beyond the in fig. 3 illustrated position of the clamping jaw 61. This is why the strip is fixated by automatic clamps of the machine, e.g. present between the rollers 51 and engage the lower edge of the strip, after which the pusher is released from the strip and is moved to its in fig. 2 illustrated start position. Then the strip is sawn horizontally wherein the sawing portal is not obstructed by the out of the way positioned pusher. Subsequently the sawing portal moves back to the left, then the pusher returns back to the now split strip and grips this again after which the automatic clamps release the strip and the pusher pushes the strip to the left.

In a different example the pusher 52 is constructed sufficiently small to fit with play behind line 62.

The drawing, specification and claims contain several features in combination. The skilled man will interpret these features also individually and combine them to applicable further combinations.

## Claims

1. A sawing or different separating machine, preferably of vertical type, with: a first clamping or retaining means (50) to accurately move an against the supporting bed bearing material (57) to be sawn into a first direction, such as upward; and/or a second clamping or retaining means (53; pusher) to displace and/or position into a second direction different from the first direction (preferably sideways) of a from the sheet cut part (strip) present in the machine, bearing against the supporting bed wherein the machine is designed such that the pusher temporary is no obstruction for the passage of a sheet to be loaded into the machine; and/or such that the pusher temporary or permanently is no obstruction for displacement in front of the supporting bed of the sawing portal, e.g. by constructing the pusher sufficient small dimensioned, or by positioning the pusher temporarily outside the movement area of the sawing portal, preferably while maintaining the fixed position of the strip which must be divided horizontally within the machine.

2. Machine according to claim 1, wherein the pusher can be moved between an operating position in which the pusher is designed to advance through the machine the strip which bears against the supporting bed and the supporting ledge, and obstructs free passage of the strip, and a passing position in which the pusher allows free passage to a strip or sheet or sheet part bearing against the supporting ledge and supporting bed, preferably the passing position is obtained in that the pusher moves away from the supporting bed, in other words space is created between the pusher and the supporting bed, which space offers a sheet bearing against the supporting bed and the supporting ledge the possibility to pass between the pusher and the supporting bed.

3. Machine according to claim 1 or 2, the strip clamp is designed to engage the strip at merely low level, e.g. a lower edge.

4. Machine according to claim 1, 2 or 3, designed to be operated such that the strip clamp engages the one side edge of the strip and pushes it sideways through the machine, to take the opposite side edge beyond the sheet part within the machine.

5. Machine according to claim 1, 2, 3 or 4, wherein the drive and/or guidance, or component of it, of the pusher is located preferably merely below the supporting part (e.g. rollers 51) onto which the into the machine located sheet bears with its lower edge.

6. Machine according to any of claims 1-5, wherein the strip clamp is spaced from its guiding means, relative to the displacement direction of the strip clamp and/or is suspended floatingly.

7. Machine according to any of claims 1-6, designed such that the first clamping means (50) engages at two mutually spaced locations.

8. Machine according to any of claims 1-7, designed such that the strip clamp engages the strip at merely a single location.

9. Machine according to any of claims 1-9, designed such that each time a lower part, such as strip, is cut and by the strip clamp sideways pushed stepwise through the machine and after a step the strip is sideways divided and a part is removed from the machine such the part engaged by the strip clamp is removed last, after which one lowers the sheet to cut a next lower part.
